# EUROPEAN PATENT SPECIFICATION

(11) **EP 2 925 425 B1**
(45) Date of publication and mention of the grant of the patent: **30.08.2017**
(21) Application number: 13796117.3
(22) Date of filing: 29.11.2013
(51) Int. Cl.: B01D 53/22, B01D 63/08

(54) **SYSTEM AND METHOD FOR GAS SEPARATION THROUGH MEMBRANES**
SYSTEM UND VERFAHREN ZUR GASTRENNUNG DURCH MEMBRANE
SYSTÈME ET PROCÉDÉ DE SÉPARATION DE GAZ À TRAVERS DES MEMBRANES

(30) Priority: 03.12.2012 EP 12008078
(43) Date of publication of application: 07.10.2015
(73) Proprietor: SOL S.p.A., 20900 Monza (MB) (IT); Technores S.r.L., 50125 Firenze (IT)
(72) Inventor: BECCALLI, Massimo, I-20847 Albiate (MB) (IT); VALTOLINA, Daniele, I-23896 Sirtori (LC) (IT); CARNEVALE, Stefano, I-59100 Prato (IT)
(74) Representative: Gislon, Gabriele
(86) International application number: PCT/EP2013/075172
(87) International publication number: WO 2014/086689

(56) References cited:
- DE-C1- 10 230 342
- FR-A- 1 547 549

## Description

The present invention concerns a device and a method for gas separation through membranes. The techniques used in the state of the art for gas separation, in particular for the production of high concentration molecular oxygen (O₂), consist mainly in cryogenic separation of the oxygen from the air and in separation by means of vacuum processes known as VSA (Vacuum Swing Adsorption).

The first process allows liquid oxygen to be obtained at high concentration, up to 99.9%, while the vacuum adsorption process allows O₂ to be obtained with a concentration of up to 95%. Both the processes are, however, characterised by high energy consumption and significant plant engineering and running costs, making them of interest only for large plants.

To solve the above problems, systems have been developed based on the use of selective membranes, which allow separation of e.g. the oxygen resulting in permeate flows with high purity, comparable to the systems previously described.

Analogously to the oxygen separation process, other selective membranes are known, e.g. those used for capturing CO₂ present in syngas flows by means of separation of the molecular hydrogen (H₂).

The membranes are included in systems, or devices, where a gas mixture to be permeated is made to flow on one side of said membranes, in selected pressure and temperature conditions and possibly with difference in potential between the sides of the membranes; the membranes allow only some gases present in the mixtures to pass through, such as oxygen, hydrogen and/or other gases, and thus permit separation into a gas, the so-called permeate. Said systems effectively form means of production of said gases.

ITM (Ion Transport Membranes) are known and used at industrial level for the separation of oxygen. Said types of membrane have recently been developed also for the separation of other gases, mainly hydrogen.

The ITM Ion Transport Membranes are produced by means of solid state ceramic materials which are characterised by high ion and/or electron diffusion speeds.

Solid electrolyte membranes are also known which use the SEOS (Solid Electrolyte Oxygen Separation) technology, consisting in the separation of oxygen by means of ceramic membranes with high ion conduction. Membranes obtained from mixed conductor materials are also known, where both the electrons and the ions migrate through the material and in this case separation of the oxygen, hydrogen and/or other gases from the mixtures is determined by the difference in partial pressure of the gas to be permeated between the opposite surfaces of the membrane, in the absence of an external potential.

In general, the separation of oxygen, hydrogen and/or other gases takes place with efficiency industrially interesting at very high temperatures, above 600°C. This means that the flow of gas from which the oxygen, hydrogen and/or other gases are to be separated must be heated to the operating temperature of the membrane in order to prevent the flow current that laps the membrane from cooling it, causing a reduction in separation efficiency. The membrane and its container or support are therefore heated to very high temperatures; for this reason, the devices of this type use particular metal gaskets for the seal between membrane and support, creating metal/ceramic/metal interfaces subject to different mechanical and thermal expansion characteristics, with all consequent problems.

FR 1547549 discloses an apparatus for fluid separation, wherein fluid is directed towards a mesh membrane composed of interlaced hollow fibres. The fluid is passed through the mesh of the membrane, and part of the composition of the fluid is trapped into the hollow fibres in order to be collected.

In *"*Mixed reforming of heptane to syngas in the Ba0.5Sr0.5Co0.8Fe0.2O3 membrane reactor" - Catalysis Today, 104, 2005, 149-153, an apparatus for gas separation is disclosed, which is composed of two members sandwiched to a permeation membrane. Each of the member has two coaxial chambers provided with inlets and outlets respectively. Depending on the side of the membrane, fluid to be permeated or already permeated fluid is forced from the inlets and to the outlets on the same side of the membrane. This system still suffers of reduced efficiency.

Thus, today the methods for production of oxygen from air, of hydrogen from Syngas and/or of other gases are evolving towards the use of membranes which, in certain conditions of pressure, temperature and potential difference, allow the selection of said gases from the gas mixtures in which they are contained, achieving concentrations of great interest for many industrial applications.

Flat membranes are preferred as they are simpler to produce and easier to replace in the event of breakage. However, numerous problems remain with the management of membranes, even flat ones. In particular there are problems with the gas separation efficiency, the seal around the membrane and the cost of the seals currently used.

The object of the present invention is to solve the above-mentioned problems and provide a fluid-dynamic system able to increase the separation efficiency and favour operation of the seal system in the operating conditions and in the beginning and end of production phases, and which is at the same time simple to produce and easy to replace in the event of breakage of the membrane.

These and further objects are achieved by a system for the separation of a gas, characterised according to claim 1. Preferred aspects are recited in the dependent claims. A further object of the invention is a method of separating gases according to claim 13.

In particular, the system according to the invention comprises a flat gas permeation membrane arranged as a seal between a first structural element and a second structural element, in which the permeation membrane separates a first environment containing gas to be permeated, and a second environment containing permeated gas. At least one of the structural elements is provided with two or more chambers arranged one inside the other, and spaced from the membrane in order to provide fluidic communication between the chambers at least in the vicinity of the membrane, i.e. in the volume of the system adjacent to the membrane. The chambers are furthermore provided with at least one inlet and at least one outlet for the gas, arranged so that a chamber provided with an inlet does not have an outlet and vice versa. In the following description chambers having one or more inlets will be defined as "inlet chambers" and chambers having one or more outlets will be defined as "outlet chambers".

The structural elements comprise means for creating a vortex motion, or vortical flow, at least on the respective surfaces of the permeation membrane. The said means for creating a vortex are any means suitable to direct the flow of gas along a direction that is inclined with respect to the plane of the membrane (or with respect to an axis perpendicular to the membrane), and that is preferably not radial with respect to the centre of the membrane. The angle of the mentioned inclination is non-null below 90°, i.e. it is within the range 0° to 90°, with values 0° and 90° excluded from the range. In other words, the value of the angle is greater than 0° and smaller than 90°. The means for creating a vortex may comprise at least one of: inclined inlet, diverters, or a combination thereof.

According to a first aspect of the invention there may be provided an inlet having, at least at its aperture in the relative chamber, a non-null inclination angle below 90° with respect to the plane on which the flat membrane lies.

The wording "inclined at least at the aperture in the chamber" is used to indicate inlets that are inclined with respect to the membrane for their whole length, and also those embodiments where the inclination of the inlets is limited only to the terminal portion, or in general to the portion corresponding to the aperture into the relative chamber.

In other possible embodiments according to the invention, there are provided fluid diverters, namely gas diverters, suitable to impart to the gas the required inclination according to an angle above 0° and below 90° with respect to the plane on which the flat membrane lies.

These gas diverters are placed downstream the inlet(s) and upstream the membrane, and they are preferably vertically spaced from the membrane; when a gas diverter is used, the inlet may be not inclined. In other embodiments, the fluid diverters may replace the inlets, i.e. the diverter is acting as an inclined inlet.

The terms "upstream" and "downstream" are referred to the fluid entering the system from the inlets. As a result, fluid diverters are "upstream" the membrane when the gas entering the system runs into the diverters means before running into the membrane.

According to a preferred aspect of the invention, the fluid diverters are at least partially placed inside one of said chambers.

In general, as the gas diverters can replace the function of the inclined inlets, they are inclined to an angle above 0° and below 90° with respect to the plane on which the flat membrane lies, in order to deviate the fluid to such a non null angle.

The walls of the chambers cooperate with the inlet(s)/diverter(s) in order to create a vortex motion within a structural element. To improve this situation, in case of fluid diverters, they are housed inside the inlet chambers.

According to a further aspect of the present invention, the inclination of the inlet(s) or of the diverter(s) is comprised between 5° and 80°, more preferably it is in the range between 20° and 60°. The outlet ducts may or may not be inclined.

In general, the arrangement of the components of the system, i.e. the arrangement of the structural element(s) with the chambers, the inclined inlet(s) and/or the gas diverter(s) is such that a stable vortex motion regime can be generated along the surface of the membrane when the gas impacts the membrane. The definition "stable vortex motion regime" does not implie that the streamlines of the fluid are constant over time.

Preferably, the inlets/diverters impart the gas a direction which is not radial with respect to the centre of the membrane, i.e. they do not deviate the fluid towards the centre of the membrane.

The vortex motion regime generated by the structural elements at the surface of the membrane, and in particular inside the above-mentioned chambers, has proved to be a particularly advantageous fluid-dynamic system, favouring gas permeation by the membrane and therefore increasing the efficiency of the entire system.

According to one aspect of the present invention, both structural elements are provided with chambers as described above.

According to a further aspect of the present invention, the structural element or structural elements provided with chambers preferably have a cylindrical geometry to minimise the pressure losses on their inner surface which could disturb the stability of the fluid-dynamic system. A prismatic geometry may be however used, namely with a number of sides above 5.

According to a further aspect of the present invention, three chambers are present as indicated above. According to a preferred embodiment, an intermediate chamber is provided with the gas inlets, while a central chamber and a lateral chamber, respectively inside and outside the intermediate chamber, are provided with the gas outlets.

Thanks to this solution, it is possible to regulate the speed of the gas in different areas of the membrane. In particular it is possible to set a gas flow speed in the outer chamber higher than the gas speed in the other chambers, so as to reduce the pressure, and therefore the stress, on the outer portion of the membrane, which is the portion near the connection with the structural elements.

According to another aspect of the present invention, the chambers are concentric.

According to a further aspect of the present invention, at least one chamber is annular.

According to a further aspect of the present invention, the geometry and arrangement of the chambers in the structural elements are substantially symmetrical to one another with respect to the membrane.

According to a further aspect of the present invention, at least two gases lap different surfaces of the permeation membrane, so as not to reciprocally influence their thermofluidic-dynamic motion or state.

The present invention furthermore concerns a gas separation method as claimed in claim 13. Preferred aspect are recited in the dependent claims.

In particular, by means of a system as described above, in which a flat permeation membrane secured between two structural elements allows the selective passage of gas from a first environment to a second environment, in at least one structural element, fluid enters at least one first chamber and leaves from at least one second chamber, where said chambers are different from each other and are in fluidic communication with each other at least in the vicinity of said membrane. Preferably the chambers are arranged one inside the other. Furthermore, , gas is supplied to at least one of the chambers through a duct which gives it an entry inclination with non-null angle below 90°, with respect to the flat membrane, or fluid diverters deviate the gas to said non null angle. The preferred angle values for the gas inlet or inlets have been defined previously.

The gas supplied is the gas to be permeated on one side of the membrane, and the permeated gas, or a carrier gas of the permeated gas, on the other side of the membrane. The partition walls of the chambers cooperate with the one or more inlets and/or one or more diverters in order to create a vortex motion within a structural element, on the membrane.

The invention has numerous advantages with respect to the known art.

The vortex motion which is generated in the chambers reduces the thickness of the boundary layer above the membrane and dramatically increases the gas separation efficiency. Furthermore, it is possible to regulate the speed of the gases (and therefore the pressure) in the area adjacent to the seal gaskets, thus reducing the pressure in said area and prolonging the working life of the gaskets.

A further advantage is represented by the fact that the system is flexible and the number of chambers can be increased from a minimum of two chambers to the required number of chambers, and gas supply pipes, such as to permit sizing of the system according to the flow rate of gases to be treated.

With reference to the Figures, a non-limiting example is provided in which:
- Figure 1 is a perspective view of a gas separation system according to the present invention;
- Figure 2 is a perspective view of the system of Figure 1 upturned;
- Figure 3A is a plan view of Figure 2;
- Figure 4 is a section view according to plane A-A of Figure 3, in which the flows of the gases in the system of the present invention are highlighted;
- Figure 4A is an enlarged detail of Figure 4;
- Figure 5 is an enlarged section view of Figure 3;
- Figure 5B is a section view of figure 5, along a plane crossing an inlet.
- Figure 6 is a section perspective view of an alternative embodiment of a gas separation system according to the present invention;
- Figures 7A - 7C are schematic sectional view of further embodiments of a system according to the present invention provided with different kinds of fluid diverters or fluidic inlets.

A system 1 for the separation of a gas comprises a flat gas permeation membrane 2, referred to below as membrane 2, secured between a first structural element 3 and a second structural element 4, below referred to as first element 3 and second element 4. The membrane 2 separates a first environment, below referred to as permeation gas chamber, containing the gas to be permeated 6, and a second environment, below referred to as permeated gas chamber, containing the permeated gas 7. The first element 3 and the second element 4 comprise means for creating a vortex motion at least on the respective surface of the membrane 2, and in particular at least one structural element is provided with at least two chambers arranged one inside the other, that are in fluidic communication at least in the vicinity of i.e. adjacent to the membrane 2. In the embodiment shown, the two structural elements 3 and 4 are provided with three chambers each 23, 24, 25 and 8, 9, 10, respectively; as mentioned, there are at least two chambers, and the number can be increased according to the dimensions required for the system and the membrane.

A membrane 2 suitable for use with the invention is any known ion absorption, or ion transport membrane operating by application of a pressure or electrical potential difference on the membrane, or a combination thereof.

Structural element 4 provided with chambers 8, 9, 10 has at least one inlet 11 and at least one outlet 12 for the gas, arranged so that the chamber with an inlet 11 does not have an outlet 12 and, vice versa, the chamber with an outlet does not also have an inlet. In other words the inlets 11 flow into chambers different from those having the outlets 12, so that an inlet 11 and an outlet 12 are not simultaneously present in the same chamber.

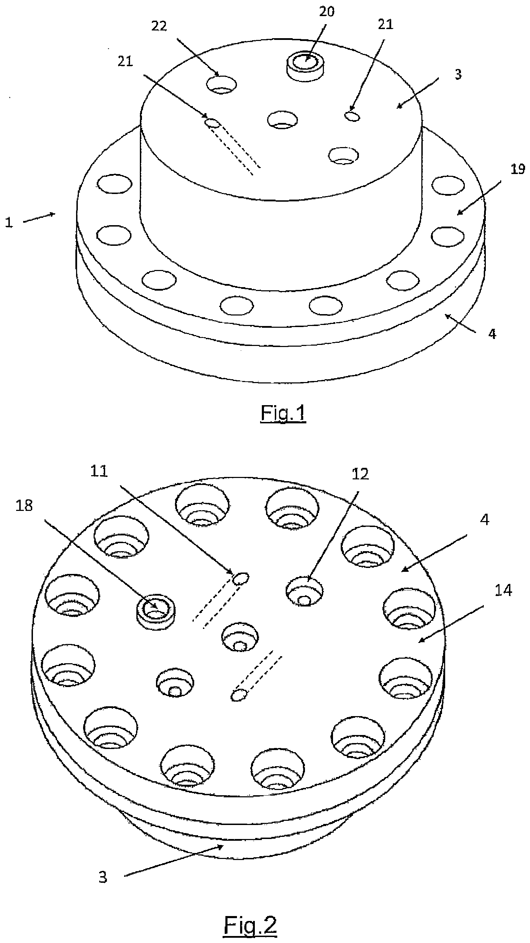

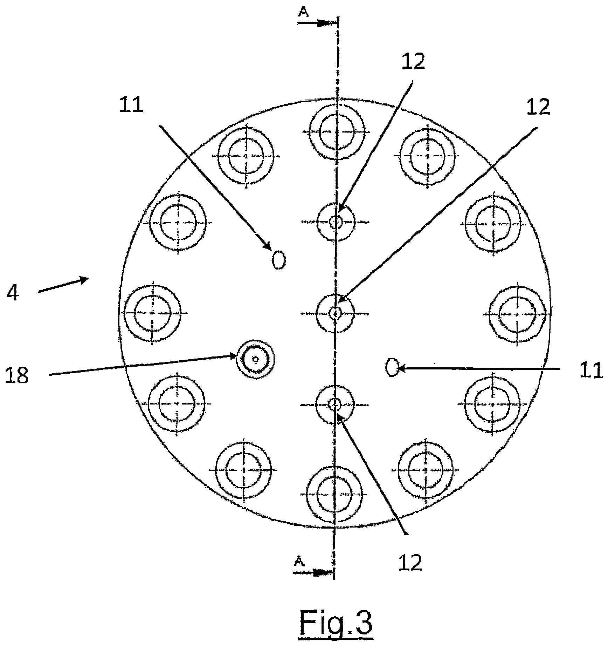

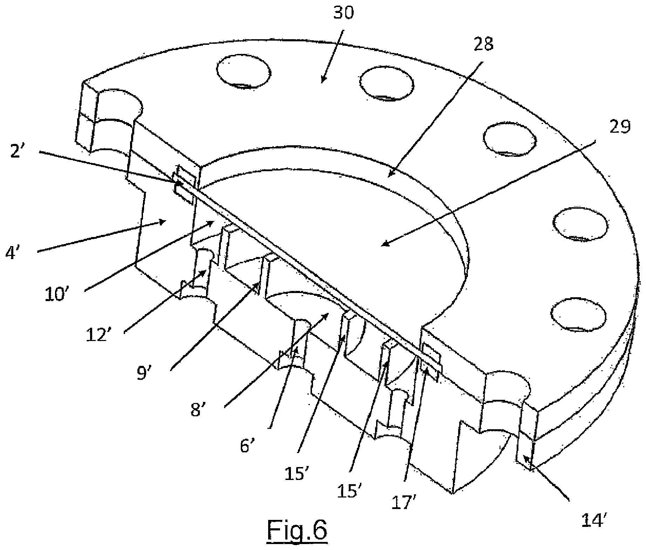

In the embodiment of Figures 1-5, both the elements 3, 4 are provided with chambers, whereas in the embodiment of Figure 6, only the element 4' defining the environment containing the permeated gas is provided with chambers. In Figure 6 the vortex motion on the side of the gas to be permeated is obtained by irregularities of the structural element with respect to the membrane.

With reference to the first embodiment of Figures 1-5, structural elements 3 and 4 have a cylindrical geometry, although a structural element with prismatic geometry (preferably with at least 5 sides, more preferably at least 7) is also possible. The cylindrical geometry is nevertheless preferred as it has proved to be the most advantageous for the fluid-dynamic conditions within element 3 or 4.

In particular, first structural element 4 comprises a main cylindrical body 13 and a coupling flange 14 positioned at one of the two ends of cylindrical body 13; similarly, structural element 3 comprises a cylindrical body 31 and a coupling flange 19.

The cylindrical bodies are preferably shaped in a complementary manner to house a membrane 2 inside them; the seal is ensured by seal elements 17, preferably positioned on both sides of the membrane, both of the permeation gas chamber and the permeated gas chamber; for example, suitable sealing elements are spirometallic gaskets and similar, known per se in the art. Suitable gaskets are also metallic or metallic with ceramic or polymer fillers resistant to high and very high temperatures.

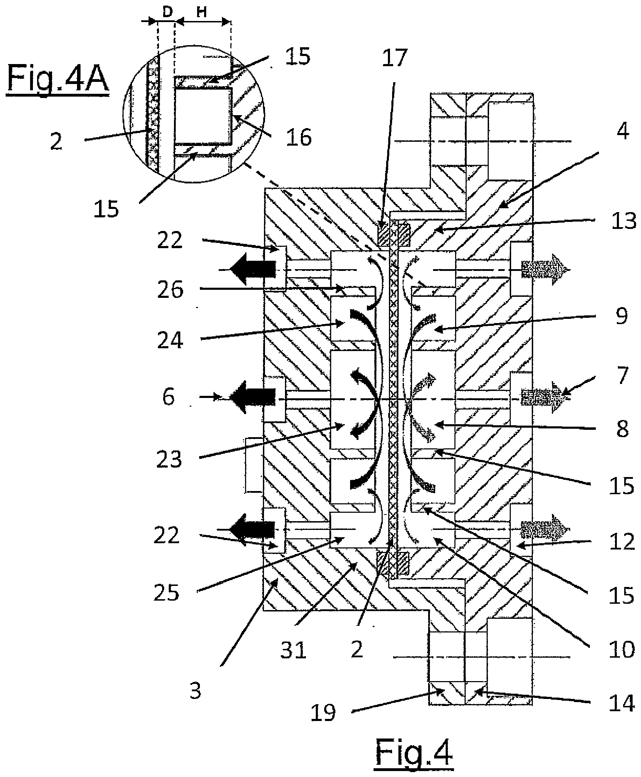

The elements 3 and 4 are provided (Figures 1 and 2) with at least one inlet 11 or 21 for respective gas 6 or 7 (Figure 4) and at least one outlet for the treated gas; in the exemplary embodiment shown, on each body 4 and 3 there are two inlets 11 and 21 and three outlets 12 and 22 for the gases.

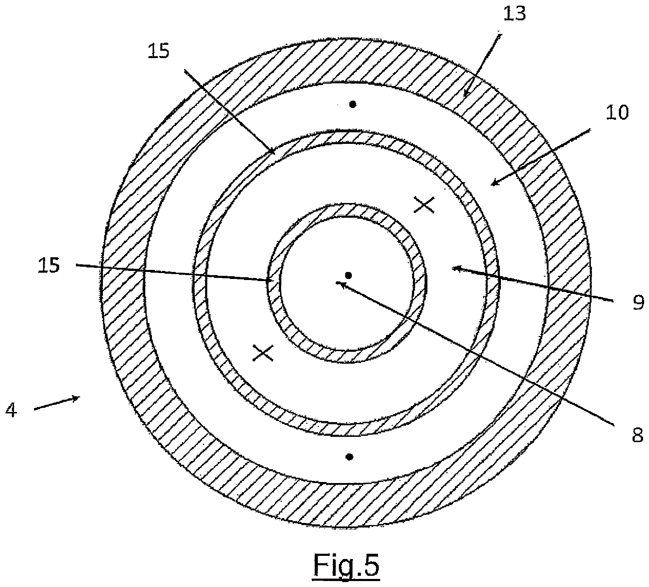

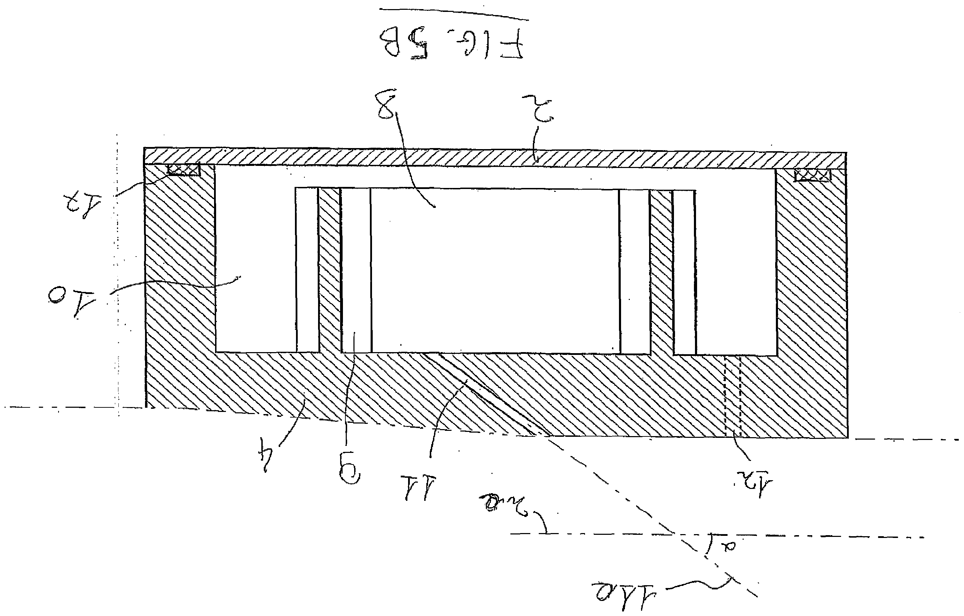

Preferably inlets 11 have, at least in the vicinity of their aperture inside the relative chamber, a non-null inclination below 90° with respect to the perpendicular to the plane on which the membrane 2 lies, or are arranged in a non-parallel and non-perpendicular manner with respect to the membrane 2. In particular, the inclination α (Fig. 5B) is in the range between 0.5° and 89.5°, preferably between 5° and 80° and more preferably between 20° and 70°, most preferably 30°-60°.

In figure 5B, for an easy visualisation, the inclination α is shown not directly on the membrane but with respect to a plane 2a parallel to the membrane 2. In figure 5B the inclination of the inlet 11 is constant for its whole length, so angle α is measured with respect to axis 11a of inlet 11.

As already mentioned, the inclination α of the inlets can be limited only to the terminal portion, or the portion corresponding to the aperture into the relative inlet chamber 9. In such a case, the axis 11a should be chosen as the axis of the portion of inlet 11 placed near the aperture of the inlet chamber 9.

If there is more than one inlet duct, the respective inclinations must be such as to facilitate circulation of the gas in the cylindrical feed chamber and therefore the inclination should preferably be such that the moments of the velocity vector of the gas of all the inlet ducts with respect to the centre of the cylindrical gas supply chamber base have the same orientation.

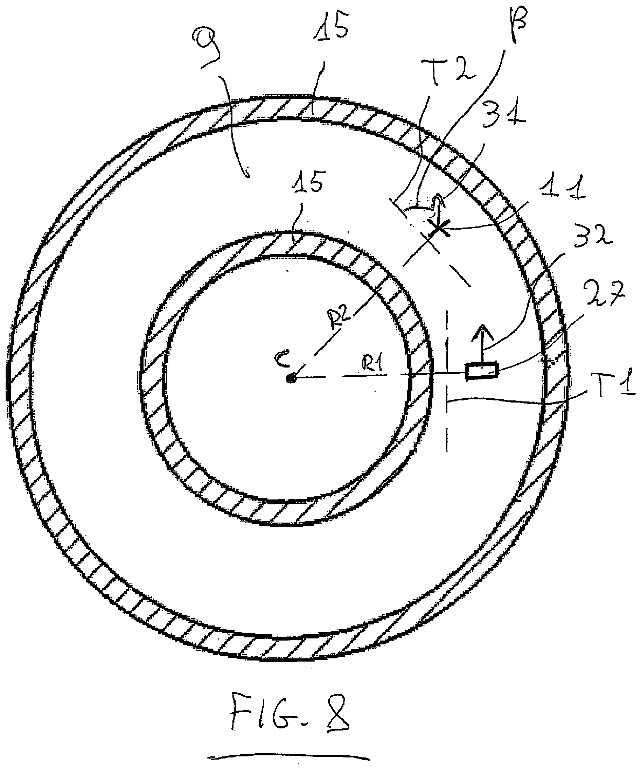

Simplifying, all the components of the gas inlet velocities in each duct projected onto the base of the feed chamber preferably have the same orientation in order to generate a clockwise or anticlockwise rotation of the incoming gas, as better explained with reference to figure 8.

The inclination of outlets 12 is a less important aspect than the inclination value of inlets 11, and may be chosen as necessary according to construction requirements. In the embodiment shown, the outlets 12 are perpendicular to the plane of membrane 2. In other words the outlets 12 are substantially parallel to the axis of the respective cylindrical body 13 or 31.

In the embodiment shown in Figures 1-5, element 4 has three concentric chambers 8, 9, 10. The chambers 8, 9, 10 are defined and separated from one another by partition walls 15 which extend from the respective cylindrical bodies in the direction of the membrane 2.

With particular reference to Figures 4 and 5, the central chamber 8 is cylindrical and is connected to one of outlets 12, in particular to the central outlet, and is an outlet chamber, within the meaning defined above; the cylindrical outlet chamber 8 is surrounded by an annular chamber 9. The annular chamber 9 is connected to inlets 11, and it is thus an inlet chamber. The annular inlet chamber 9 is furthermore surrounded by an annular outlet chamber 10, connected to two lateral outlets 12.

The position of the opening of inlets 11 and outlets 12 inside chambers 8, 9, 10 is shown in Figure 5 where, for sake of simplicity, the opening of inlets 11 is indicated by an X while the aperture of outlets 12 is schematised by a dot.

The partition walls 15 are spaced from the membrane and allow the required fluidic communication between the chambers 8, 9, 10 only in the vicinity of the membrane 2, separating said chambers 8, 9, 10 near the base surface 16 (Fig. 4A detail of Fig. 4), or the surface with the apertures of the inlets 11 and outlets 12.

In particular, the partition walls protrude by a height H from the surface 16, so that between the upper surface of the partition walls 15 and the membrane 2 a fluid passage is guaranteed between the various chambers 8, 9, 10 with height D. The ratio between D and H is chosen according to the fluid-dynamic characteristics required within the system 1. In general H is greater than D, in order to avoid fluid-dynamic interferences between the outlets 12 and the inlets 11.

Furthermore, the height H of the cylindrical walls that separate the chambers 8, 9, 10, already defined as 15, can be different, so that the height of the section for passage through the membrane is different between the annular chamber 9 into which the flow is injected and the cylindrical chamber 8 containing the flow outlet section, and between the annular chamber 9 and the annular chamber 10 containing at least one flow outlet.

Said variation in the ratio between H and D can be defined to obtain the best fluid-dynamic field inside the above-mentioned chambers. Analogously, within the element 3 the heights of the corresponding chambers can be different.

In the embodiment of Figures 1-5, the first element 3 has an internal structure substantially specular to the internal structure of the second element 4. In particular, the first element 3 has a cylindrical body 31 terminating in a coupling flange 19, adapted to be secured by a fluid-tight connection with the corresponding flange 14 of the second element 4.

The openings of the inlets 21 and outlets 22 are located on the top of the cylindrical body 23 of the first element 3, and are shaped analogously to inlets 11 and outlets 12 of the first element 4. The inlets 21 are therefore angled with respect to the plane of the membrane 2, while outlets 22 are substantially perpendicular to membrane 2.

The first element 3 is furthermore provided with three concentric chambers 23, 24, 25, analogous and symmetrical to chambers 8, 9, 10 respectively of the second element 4; in particular, the outlets 22 open into the central cylindrical chamber 23 and the outer annular chamber 25, while the inlets 21 open into the intermediate annular chamber 24.

Partition walls 26, shaped in a similar way to the partition walls 15, separate the chambers, while allowing fluidic communication between the same in the vicinity of the membrane 2.

To guarantee the fluid-tight seal between the two elements 3, 4, a pair of gaskets 17 which surround the membrane 2 in its lateral portion are positioned between elements 3, 4. The gaskets 17 are for example spirometallic gaskets.

As can be seen in the figures, the two elements 3, 4 are each provided with a further inlet 18, 20 for thermocouples, or other measuring probes, adapted to monitor the process in progress inside the system 1.

In the embodiment of Figure 6, the second element 4' comprises the same parts as the second element 4 of the embodiment of Figures 1-5. Elements with the same function and structure have been given numerical references identical to the embodiment of Figures 1-5, followed by a superscript. For a description of said elements, see above.

The first element 30 consists of a ring adapted to be secured by a fluid-tight connection with the coupling flange 14' of the second element 4'. A wall 28 of the first element 30 delimits a central area 29 adapted to create a vortex motion near the membrane 2', as will be explained in further detail below.

Further embodiments, not shown in the figures, are possible. For example, the forms can be simplified with respect to the Figures shown. As regards the shape of the chambers, for example, it is possible to provide only two chambers one inside the other, preferably a cylindrical central chamber and an annular chamber concentric to the central chamber.

The number of inlets and/or outlets can also be reduced, in case providing only one inlet and only one outlet. In the simplest possible form, a single inlet is connected to one of the two chambers that form the structure, while a single outlet is connected to the other of the two chambers.

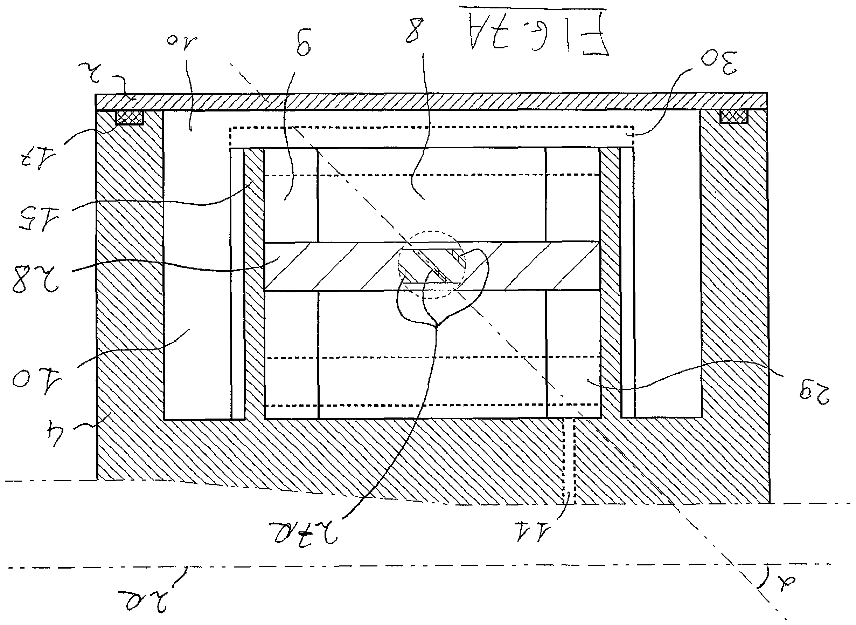

Figures 7A - 7B show two possible embodiments of the present invention, wherein the vortex motion is realized thanks to fluid diverters, instead of inclined inlets.

Figures 7A - 7B (and the following 7C also) use the same numeric reference of the previous embodiments for means being identical to the correspondent means shown in Figures 1 - 5. The parts of the system omitted in figures 7A - 7C are identical in the previous embodiments.

The solutions of figures 7A - 7C may be equally applied to the structural element 3, or to the structural element 4, or both. In Figures 7A - 7C, they are applied to the structural element 4.

Different types of fluid diverters 27a, 27b known in the art may be used with the present invention.

In the embodiment of Figure 7A, the inlet chamber 9 is provided with different inlets. Only one inlet 11 is shown for simplicity. Inlet 11 is drawn in dot lines because it is placed in a plane behind the plane of the section shown.

Inlet chamber 9 is provided with a diffuser 28, having a plurality of diverters 27a, in the forms of fins or blades, inclined to a non null angle α with respect to the membrane 2. As per figure 5B, angle α is shown relative to a plane 2a parallel to the membrane 2. The diffuser may be distributed along the whole 360 degrees of the inlet chamber, or may be placed only for limited angular areas inside the inlet chamber 9.

Moreover, the diverters 27a may be placed at different heights within the inlet chamber 9. As an example, in dotted lines there are shown a second position 29 near the aperture of the inlet 11 within the inlet chamber, and a third position 20, which is partially placed outside the chamber.

It may be also possible to place the diverters 27a totally outside the inlet chamber, if sufficient vertical space (see distance D in fig 4A) is provided between the chamber and the membrane 2. Moreover, more diverters 27a may be used in series, e.g. by placing two or more diffusers 28 in series, as in a multi-stage axial turbine. Diverters 27a are shown as plane fins, may be as well replaced with any kind of blade or aerodynamic foil apt to deviate a gas. A position of the fluid diverters 27a, 27b inside the relevant chamber is preferred, in order to take advantage of the partition walls 15 that create a vortex motion at the surface of the membrane 2. Instead diverters placed in a diffuser, the chamber itself may be shaped to impart to the gas the required inclination.

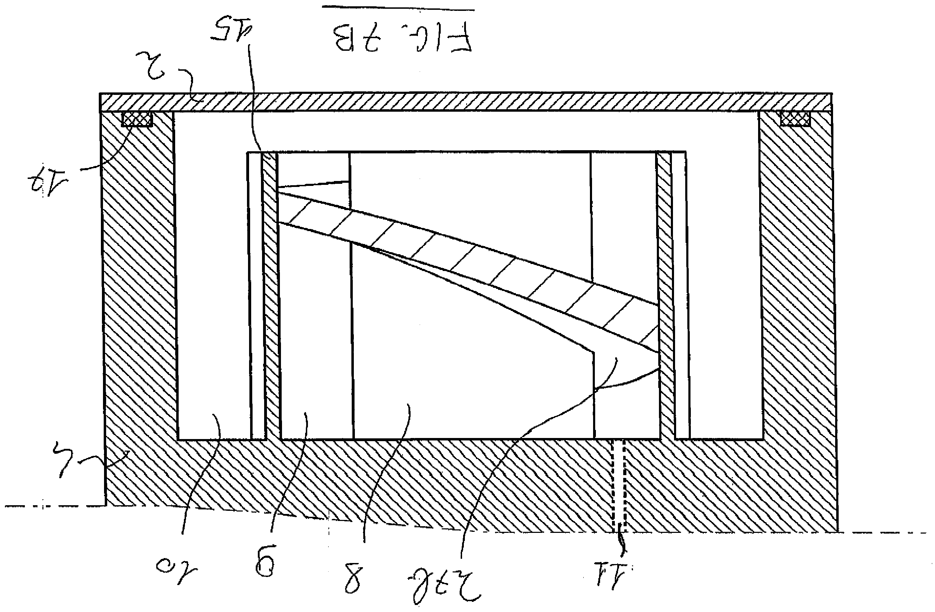

As an example, in figure 7B, inlet chamber 9 is integrally provided with a diverter 28b, shaped as a ramp spiralled around the inner outlet chamber 8. A similar diverter may be in any case a different element with respect to the inlet chamber 9, apt to be inserted in the inlet chamber.

In figure 7B, for simplicity of visualization, there are shown only one inlet 11 and one diverter 28B having a long development inside the inlet chamber 9, and having a constant slope. However, in use, the inlet chamber 9 will preferably have more inlets and more diverters 28, having a shorter and more complex development inside the inlet chamber 9. These diverters 28 will however have an inclination α with respect to the membrane 2, at least in their terminal portion, which is comprised in the previously mentioned range 0° - 90°, so as to import to the gas the required direction inclined to the membrane.

In general, the fluid diverter(s) 27a, 27b is/are placed downstream the aperture of the inlet within the chamber, and upstream and spaced from the membrane 2, as it is preferable to have a certain space between the diverter(s) 27a, 27b and the membrane 2.

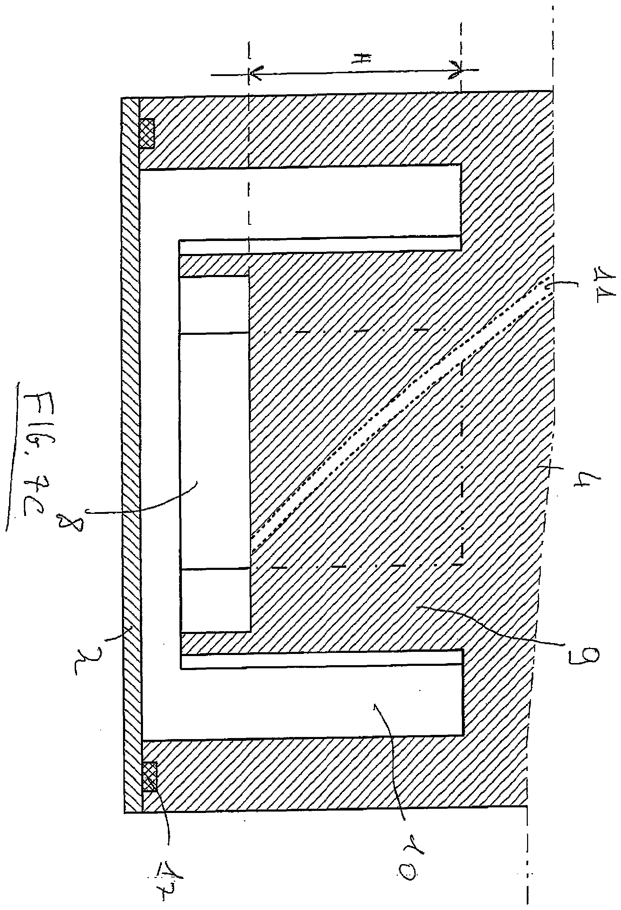

In Figure 7C, the inlet chamber 9 is partially filled with material, and a plurality of inlets 11 cross the height H of chamber 9 filled with material for its whole length. Only one inlet 11 is shown, and it is represented in dotted lines, as its whole length does not cross the plane of the section shown, and would not be visible in reality in the section view of fig 7C. What is shown is the development of the inlets 11 within the inlet chamber 9. In particular, the inlets 11 are wound around the inner outlet chamber 8 (shown in dot dash line) for at least part of its length, and in particular at least in their final portion. The value of the height H of the material is only illustrative, as it may be different. According to a possible embodiment it is contemplated an inlet chamber completely filled with material.

Moreover, even if not shown, embodiments of Figures 1- 6 may be combined with embodiments of Figures 7A - 7C, e.g. in order to place one or more fluid diverters downstream an inclined inlet. Finally, fluid diverters may be also employed in case of a different number of chambers.

As per the inlets 11, 21, diverters 27a, 27b promote a clockwise or anticlockwise rotation of gas around the centre of the membrane 2.

In order to perform such a result, the inlets 11,21 or diverters 27a, 27b preferably inject/deviate the gas within the inlet chamber 9 along a direction that is not radial, and preferably tangential to the walls. The definition of "radial" and "tangential" is evident to a person skilled in the art and is now briefly explained with reference to Figure 8.

In Figure 8, there are shown schematically the position of an inlet 11 and a diverter 27 (which may be a generic diverter) inside one structural element (which in Figure 8 is second structural element 4, even if the following reasoning equally applies also to first structural element 3) and the relevant direction 31, 32 of injection/deviation of gas. Obviously, direction 31, 32 is the projection of the velocity of gas injected/deviated by inlet 11/diverter 27 on the plane of the shown view, as it is evident that gas does not flow in a plane parallel to the membrane 2, but it is angled with respect to the membrane to an angle α as above disclosed (see figures 5B, 7A - 7C).

Radiuses R1, R2 connect the centre C of the membrane 2 respectively with the position the position of the diverter 27 and of the aperture of the inlet 11 within inlet chamber 9. In case of an elongate diverter 27 (e.g. as the diverter 27b in Figure 7B), the radius R1 is referred to the outlet, i.e. the terminal portion near the membrane 2, of the diverter 27.

Preferably, the gas is fed by inlet 11 or deviated by diverter 27 along a direction 31, 32 that is not radial, i.e. a direction 31, 32 that is not parallel to the respective radius R1, R2. In particular, the direction 32 to which gas is deviated by the diverter 32 is perpendicular to radius R1, i.e. parallel to a direction T1, which represents a line tangent to a circumference having radius R1 and centre C. This direction is known as "tangential".

Direction 31 of injection of gas through inlet 11 is angled by an angle β with respect to the relevant tangential direction T2. As mentioned, according to a preferred aspect, directions 31, 32 are "tangential" within the meaning defined above, i.e. perpendicular to relevant radius R1, R2.

However an angle between the "tangential" direction T1, T2 and the direction 31, 32 of injection deviation of gas is contemplated. Such an angle β is preferably smaller than 60°.

The "tangential", or not-radial, direction of the gas leaving the inlet 11 or the diverter 27 will impact the partition walls 15 of the inlet chamber and the resulting flow of gas will acquire the required movement. Thus, partition walls 15 cooperate with the one or more inlets 11, 21 and/or one or more diverters 27a, 27b in order to create a vortex motion within a structural element 3, 4. In the operating method of the first embodiment of Figures 1 - 5, a gas to be permeated 6 under pressure is introduced inclined at a non-null inclination angle below 90° with respect to the plane on the flat membrane 2 lies via the inlets 21 into the intermediate annular chamber 24 of the first element 3.

In case of fluid diverters 27a, 27b in the first element 3, such a non null inclination to the fluid is imparted by means of the diverters 27a, 27b.

The injection 31 / deviation 32 of gas 6 performed by the inlets 21 / diverters 27a, 27b, preferably in cooperation with the partition walls 15 of the chambers 23, 24, 25, allow to create a vortex motion within the first element 3, on substantially all of the membrane's surface.

The cited vortex motion allows reducing the thickness of the boundary layer above the membrane 2, thus promoting the operation of the membrane 2.

Due to the shape of the chambers 23, 24, 25, and also to the inclination of the inlets 21, a vortex motion is generated inside the first element 3 at least on the membrane. The action of the membrane 2 separates in a known way a portion of gas to be permeated 6. Said portion of gas is the gas to be obtained at the end of the process, i.e. the permeated gas 7, which is therefore released from the membrane into the second element 4. The gas to be permeated 6 is therefore expelled from the first element 3 through the outlets 22, or from the central chamber 23 and from the outer annular chamber 25.

Once the permeated gas 7 has been separated from the gas to be permeated 6 by the action of the membrane 2, must be extracted from the second structural element.

For said purpose, a carrier gas is injected through the inlets 11 of the second element 4. In the embodiment shown, the carrier gas is equal to the permeated gas 7 and comes, pressurised, from an external reserve not shown in the Figures.

As in first element 3, the permeated gas 7 in the structural element 4 may be removed from the area above the membrane 2 by means of the inclination of the inlets 11 which inject the gas along the required inclination α, and/or by means of fluid diverters 27a, 27b which deviate the fluid coming from the inlets to the above mentioned proper inclination α.

Instead of the permeated gas 7, it is possible to inject a gas which does not bind molecularly with the permeated gas 7, typically an inert gas.

The carrier gas, or the permeated gas 7 or an inert gas, from an external reserve is therefore injected into the intermediate annular chamber 9, so as to expel from the chambers 8 and 10, via the outlets 12, the permeated gas 7 obtained during the process.

In order to make easier the action of the membrane 2, it is preferable to differentiate the pressures between the two elements 3, 4, in particular it is preferable to have a lower pressure in the second element 4, or in the area containing the permeated gas 7.

The process described above applies, with obvious modifications, also to the embodiment comprising 2 chambers and/or a lower number of inlets and/or outlets. As regards the embodiment of Figure 6, the process of expulsion of the permeated gas from the element 4' is analogous to the process described above concerning the element 4 of the first embodiment.

The feeding of the gas to be permeated is, however, different. In this embodiment the gas to be permeated flows freely in a direction mainly parallel to the plane of the membrane 2'.

The central area 29, defined by the wall 28, forms a depression near the membrane 2' which disturbs the flow of gas to be permeated, creating a vortex motion near the membrane. Said solution is less effective than the chamber arrangement, but allows sharing the same flow of gas to be permeated among several systems 1 according to the invention.

The multi-chamber configuration, with particular reference to the three-chamber configuration, has proved to be particularly effective in the reduction of stress in the outermost portion of the membrane 2, 2', or in the area near the gaskets 17, 17'. Via numerical fluid-dynamic simulation software, it has been ascertained that the geometry of the present invention allows an increase in the tangential velocity of the fluid in the outermost area of the surface of the membrane 2, 2', which in the three-chamber configuration substantially coincides with the projection of the outermost annular chamber on the membrane. As is known, said situation results in a reduction in the static pressure on the corresponding area of the membrane 2, 2'.

In particular, it has been noted that the velocity on the surface of the membrane near the outermost annular chamber reaches values equal to or above 50% of the maximum velocity value recorded in the chambers of the system, said maximum value being reached near the aperture of the outlets 12, 12', 22 within structural elements 3, 4', 4.

Lastly, some characteristic values of the process are provided below.

The pressure of gas 6 to be permeated is in the range of 0.1 to 50 bars, preferably 5 to 50 bars; the pressure of the permeated gas 7 injected into the system is preferably below the pressure of the gas to be permeated 6 and in particular the pressure of the permeated gas 7 is below 49 bars, preferably in the range of 0.5 to 49 bars. The operating temperature is below 1100°C, and is preferably between 450°C and 950°C.

The invention will now be exemplified with reference to the following non-limiting example.

### Example 1

By way of example, the data of the system based on utilisation of the selective membrane for gas, used to achieve the aims of the claims of the present patent, are given below.

The system in question consists of a solid membrane with flat circular geometry, diameter 80 mm and thickness 2 mm. The radius of the cylindrical chamber with central circular section 8 is 11 mm. The external radius of the annular chamber 10 is 33 mm, while the internal and external radius of the annular gas inlet chamber 9 are 13 mm and 23 mm respectively. The height of the walls of the chambers 15 is 10 mm and the height of the section for passage of the fluid through the membrane D is 3 mm.

As described, said geometric dimensions are the same for the element 4.

The thermofluidic-dynamic calculations for optimisation of the system were performed with a flow rate of 15 l/min, a mean absolute pressure of the gas to be permeated of 11 bars and a mean absolute pressure of the permeated gas of 1 bar. Both the gases were considered at a temperature of 1000°C.

To perform the analysis and subsequent optimisation of the flow field and analysis of the thermofluidic-dynamic properties of the flow inside the chambers for supply of the mixture of gas 6 to be permeated and the permeate extraction gas 7, simulation programs are used known in the art and commercially available. A suitable program is the Flow Simulation module of the Solidworks software by Dassault Systemes.

Said module allows the performance of thermofluidic-dynamic numerical simulations of real systems with a high level of complexity, starting from the geometry of the system designed by means of the Solidworks software.

The Flow Simulation module allows said numerical simulations to be performed by solving the equations of conservation of the flow rate, quantity of motion and energy for real flows, i.e. taking account of both high turbulence flows, flows that lap surfaces characterised by surface roughness and flows subject to variations in temperature due to the effect of heat exchange phenomena. Said equations used in the numerical calculation steps, which are used by the common numerical simulation software in the state of the art, are defined by application of the first and second principle of thermodynamics which are at the basis of the thermofluidic-dynamic processes.

The Flow Simulation module allows the above-mentioned thermofluidic-dynamic simulations to be performed by setting specific boundary conditions necessary in order to perform the simulations.

In particular, in the specific case of the calculation performed relative to the vessels of the mixture of gas to be permeated and of the sweep gas for extraction of the permeated gas, the following boundary conditions were set:
a) inlet boundary condition: system inlet flow rate. For simulation of the flow field and consequent thermofluidic-dynamic optimisation of the system subject of the patent, a flow rate of 15 l/min at the inlet temperature of the mixture of gas to be permeated was used.
b) Inlet boundary condition: system inlet flow temperature, equal to 1000°C in the simulations performed.
c) Outlet boundary conditions: system outlet pressure, approximately 11 bars. Said value was optimised so as to obtain the absolute pressure value of the mixture of gas to be permeated of 11 bars at the surface of the separation membrane.
d) Boundary condition on system surfaces: surface roughness for simulation of the real flow conditions.

## Claims

1. A system for the separation of a gas (6, 7), comprising a flat gas permeation membrane (2) secured between a first structural element (3) and a second structural element (4), said flat permeation membrane (2) separating a first environment containing gas to be permeated (6), from a second environment containing permeated gas (7), said first and second structural elements (3, 4) comprising means for creating a vortex motion at least on the respective surface of said permeation membrane (2), **characterised in that** at least one structural element (3, 4) is provided with at least two chambers (8, 9, 10, 23, 24, 25) arranged one inside the other, and spaced from the membrane in order to provide fluidic communication with each other at least in the vicinity of said membrane (2), said chambers comprising at least one inlet chamber (8, 23) having at least one inlet (11, 21) and at least one outlet chamber (9, 10, 24, 25) having at least one outlet (12, 22) for the gas (6, 7), a chamber (8, 9, 10, 23, 24, 25) provided with an inlet (11, 21) being free of outlets (12, 22), wherein said means for creating a vortex comprise at least one of: an inlet (11, 21) of an inlet chamber (8, 23), inclined to a non-null inclination angle (α) below 90° with respect to the plane on which said flat membrane (2) lies; a gas diverter inclined to a non-null inclination angle (α) below 90° with respect to the plane on which said flat membrane (2) lies; or a combination thereof.

2. The system as claimed in claim 1, wherein both said structural elements (3, 4) are provided with said at least two chambers (8, 9, 10, 23, 24, 25).

3. The system as claimed in claim 1 or 2, wherein the structural element or the structural elements (3, 4) provided with said chambers (8, 9, 10, 23, 24, 25) have a prismatic or cylindrical, geometry.

4. The system according to any previous claim, wherein three of said chambers (8, 9, 10, 23, 24, 25) are present.

5. The system according to any previous claim, wherein said fluid diverters comprise blades, fins, or aerodynamic foils apt to deviate the gas.

6. The system according to any previous claim, wherein said fluid diverters are integral to one of the chambers.

7. The system according to any of the previous claims, wherein said fluid diverters are spaced from said flat membrane.

8. The system according to any of the previous claim, wherein said fluid diverters are housed inside one of said inlet chambers.

9. The system according to any previous claim, wherein said inclination angle is between 20° and 60°.

10. The system according to any previous claim, wherein said chambers (8, 9, 10, 23, 24, 25) are concentric.

11. The system according to any previous claim, wherein at least one of said chambers (8, 9, 10, 23, 24, 25) is annular.

12. The system according to any previous claim, wherein the geometry and the arrangement of the chambers in the structural elements (3, 4) are symmetrical to one another with respect to the membrane.

13. A method for the separation of gas (6, 7), by means of a system (1) according to any claim from 1 to 10, wherein a flat permeation membrane (2) secured between two structural elements (3, 4) allows the selective passage of gas (6, 7) from a first environment to a second environment, **characterised in that**, in at least one structural element (3, 4), gas (6, 7) enters in at least one inlet chamber (8, 9, 10, 23, 24, 25) and leaves from at least one outlet chamber (8, 9, 10, 23, 24, 25), said chambers (8, 9, 10, 23, 24, 25) differing from each other, being arranged one inside the other and being spaced (D) from said membrane in order to provide fluidic communication with each other at least in the vicinity of said membrane (2), wherein said gas (6, 7) is deviated to a non-null inclination below 90° with respect to the flat membrane, by means of at least one of an inlet (11, 21), or fluid diverters, or a combination thereof.

14. The method according to claim 13, wherein a pressure difference exists between the gas to be permeated (6) and the permeated gas (7).

15. A method according to claim 13 or 14, wherein the partition walls (15) of the chambers cooperate with the one or more inlets (11, 21) and/or one or more diverters (27a, 27b) in order to create a vortex motion within a structural element (3, 4).

## Patentansprüche

1. Ein System zur Trennung eines Gases (6, 7) enthaltend eine zwischen einem ersten Strukturelement (3) und einem zweiten Strukturelement (4) befestigte flache Gaspermeationsmembran (2), wobei die flache Permeationsmembran (2) eine erste Umgebung, die ein zu permeierendes Gas (6) enthält, von einer zweiten Umgebung trennt, die permeiertes Gas (7) enthält, wobei das erste und das zweite Strukturelement (3, 4) Mittel zum Erzeugen einer Wirbelbewegung zumindest auf der jeweiligen Oberfläche der Permeationsmembran (2) enthält, **dadurch gekennzeichnet, dass** mindestens ein Strukturelement (3, 4) mit mindestens zwei ineinander angeordneten Kammern (8, 9, 10, 23, 24, 25) versehen ist, die von der Membran beabstandet sind, um zumindest in der Nähe der Membran (2) eine fluidische Verbindung miteinander vorzusehen, wobei die Kammern mindestens eine Einlasskammer (8, 23) mit mindestens einem Einlass (11, 21) und mindestens eine Auslasskammer (9, 10, 24, 25) mit mindestens einem Auslass (12, 22) für das Gas (6, 7), eine Kammer (8, 9, 10, 23, 24, 25), die mit einem Einlass (11, 21) versehen ist jedoch frei von Auslässen (12, 22) ist, enthält, wobei die Einrichtung zum Erzeugen eines Wirbels mindestens eines aufweist ausgewählt aus einem Einlass (11, 21) einer Einlasskammer (8, 23), der um einen Nicht-Null-Neigungswinkel (α) von unter 90° in Bezug auf die Ebene geneigt ist, auf der die flache Membran (2) liegt; einer Gasumlenkung, die um einen Nicht-Null-Neigungswinkel (α) von unter 90° in Bezug auf die Ebene geneigt ist, auf der die flache Membran (2) liegt; oder einer Kombination davon.

2. Das System gemäß Anspruch 1, wobei beide Strukturelemente (3, 4) mit den mindestens zwei Kammern (8, 9, 10, 23, 24, 25) versehen sind.

3. Das System gemäß Anspruch 1 oder 2, wobei das Strukturelement oder die Strukturelemente (3, 4), die mit den Kammern (8, 9, 10, 23, 24, 25) versehen sind, eine prismatische oder zylindrische Geometrie aufweisen.

4. Das System gemäß irgendeinem der vorhergehenden Ansprüche, wobei drei der Kammern (8, 9, 10, 23, 24, 25) vorhanden sind.

5. Das System gemäß irgendeinem der vorhergehenden Ansprüche, bei dem die Fluidumlenkungen Blätter, Rippen oder aerodynamische Profile umfassen, die geeignet sind, das Gas abzulenken.

6. Das System gemäß irgendeinem der vorhergehenden Ansprüche, bei dem die Fluidumlenkungen einstückig mit einer der Kammern sind.

7. Das System gemäß irgendeinem der vorhergehenden Ansprüche, wobei die Fluidumlenkungen von der flachen Membran beabstandet sind.

8. Das System gemäß irgendeinem der vorhergehenden Ansprüche, bei dem die Fluidumlenkungen in einer der Einlasskammern untergebracht sind.

9. Das System gemäß irgendeinem der vorhergehenden Ansprüche, wobei der Neigungswinkel zwischen 20° und 60° liegt.

10. Das System gemäß irgendeinem der vorhergehenden Ansprüche, wobei die Kammern (8, 9, 10, 23, 24, 25) konzentrisch sind.

11. Das System gemäß irgendeinem der vorhergehenden Ansprüche, bei dem mindestens eine der Kammern (8, 9, 10, 23, 24, 25) ringförmig ist.

12. Das System gemäß irgendeinem der vorhergehenden Ansprüche, bei dem die Geometrie und die Anordnung der Kammern in den Strukturelementen (3, 4) hinsichtlich der Membran symmetrisch zueinander sind.

13. Ein Verfahren zur Trennung von Gas (6, 7) mittels eines Systems (1) gemäß irgendeinem der Ansprüche 1 bis 10, wobei eine zwischen zwei Strukturelementen (3, 4) befestigte flache Permeationsmembran (2) den selektiven Durchgang von Gas (6, 7) von einer ersten Umgebung zu einer zweiten Umgebung ermöglicht, **dadurch gekennzeichnet, dass** in mindestens einem Strukturelement (3, 4) Gas (6, 7) in mindestens eine Einlasskammer (8, 9, 10, 23, 24, 25) eintritt und aus mindestens einer Auslasskammer (8, 9, 10, 23, 24, 25) austritt, wobei sich die Kammern (8, 9, 10, 23, 24, 25) voneinander unterscheiden, ineinander angeordnet sind und von der Membran beanbstandet (D) angeordnet sind, um zumindest in der Nähe der Membran (2) eine fluidische Verbindung miteinander zu schaffen, wobei das Gas (6, 7) unter einer Nicht-Null-Neigung von unter 90° bezüglich der flachen Membran mittels mindestens einem ausgewählt aus einem Einlass (11, 21) oder aus Fluidumlenkungen oder einer Kombination davon umgelenkt wird.

14. Das Verfahren gemäß Anspruch 13, wobei zwischen dem zu permeierenden Gas (6) und dem permeierten Gas (7) eine Druckdifferenz besteht.

15. Ein Verfahren gemäß Anspruch 13 oder 14, bei dem die Trennwände (15) der Kammern mit dem einen oder den mehreren Einlässen (11, 21) und/oder einem oder mehreren Fluidumlenkungen (27a, 27b) zusammenwirken, um eine Wirbelbewegung innerhalb eines Strukturelements (3, 4) zu erzeugen.

## Revendications

1. Système pour la séparation d'un gaz (6, 7), comprenant une membrane plate de perméation de gaz (2) fixée entre un premier élément structurel (3) et un second élément structurel (4), ladite membrane plate de perméation (2) séparant un premier environnement contenant un gaz à faire traverser (6), d'un second environnement contenant un gaz ayant traversé (7), lesdits premier et second éléments structurels (3, 4) comprenant un moyen pour créer un mouvement tourbillonnaire au moins sur la surface respective de ladite membrane de perméation (2), **caractérisé en ce qu'**au moins un élément structurel (3, 4) est pourvu d'au moins deux chambres (8, 9, 10, 23, 24, 25) disposées les unes dans les autres, et séparées de la membrane afin de fournir une communication fluidique les unes avec les autres au moins au voisinage de ladite membrane (2), lesdites chambres comprenant au moins une chambre d'entrée (8, 23) comportant au moins une entrée (11, 21) et au moins une chambre de sortie (9, 10, 24, 25) comportant au moins une sortie (12, 22) pour le gaz (6, 7), une chambre (8, 9, 10, 23, 24, 25) pourvue d'une entrée (11, 21) étant exempte de sorties (12, 22), dans lequel ledit moyen pour créer un tourbillon comprend au moins l'un parmi : une entrée (11, 21) d'une chambre d'entrée (8, 23), inclinée selon un angle d'inclinaison (α) non nul inférieur à 90° par rapport au plan sur lequel ladite membrane plate (2) se trouve ; un déviateur de gaz incliné selon un angle d'inclinaison (α) non nul inférieur à 90° par rapport au plan sur lequel ladite membrane plate (2) se trouve ; ou une combinaison de ceux-ci.

2. Système selon la revendication 1, dans lequel lesdits deux éléments structurels (3, 4) sont pourvus desdites au moins deux chambres (8, 9, 10, 23, 24, 25).

3. Système selon la revendication 1 ou 2, dans lequel l'élément structurel ou les éléments structurels (3, 4) pourvus desdites chambres (8, 9, 10, 23, 24, 25) présentent une géométrie prismatique ou cylindrique.

4. Système selon une quelconque revendication précédente, dans lequel trois desdites chambres (8, 9, 10, 23, 24, 25) sont présentes.

5. Système selon une quelconque revendication précédente, dans lequel lesdits déviateurs de fluide comprennent des pales, des ailettes, ou des feuilles aérodynamiques capables de dévier le gaz.

6. Système selon une quelconque revendication précédente, dans lequel lesdits déviateurs de fluide font partie intégrante de l'une des chambres.

7. Système selon l'une quelconque des revendications précédentes, dans lequel lesdits déviateurs de fluide sont séparés de ladite membrane plate.

8. Système selon une quelconque revendication précédente, dans lequel lesdits déviateurs de fluide sont logés à l'intérieur d'une desdites chambres d'entrée.

9. Système selon une quelconque revendication précédente, dans lequel ledit angle d'inclinaison est situé entre 20° et 60°.

10. Système selon une quelconque revendication précédente, dans lequel lesdites chambres (8, 9, 10, 23, 24, 25) sont concentriques.

11. Système selon une quelconque revendication précédente, dans lequel au moins une desdites chambres (8, 9, 10, 23, 24, 25) est annulaire.

12. Système selon une quelconque revendication précédente, dans lequel la géométrie et l'agencement des chambres dans les éléments structurels (3, 4) sont symétriques les uns aux autres par rapport à la membrane.

13. Procédé pour la séparation d'un gaz (6, 7), au moyen d'un système (1) selon une quelconque revendication 1 à 10, dans lequel une membrane plate de perméation (2) fixée entre deux éléments structurels (3, 4) permet le passage sélectif d'un gaz (6, 7) depuis un premier environnement vers un second environnement, **caractérisé en ce que**, dans au moins un élément structurel (3, 4), un gaz (6, 7) entre dans au moins une chambre d'entrée (8, 9, 10, 23, 24, 25) et sort par au moins une chambre de sortie (8, 9, 10, 23, 24, 25), lesdites chambres (8, 9, 10, 23, 24, 25) étant différentes les unes des autres, étant disposées les unes à l'intérieur des autres et étant séparées (D) de ladite membrane afin de fournir une communication fluidique les unes avec les autres au moins au voisinage de ladite membrane (2), dans lequel ledit gaz (6, 7) est dévié selon une inclinaison non nulle inférieure à 90° par rapport à la membrane plate, au moyen d'au moins un parmi une entrée (11, 21), ou des déviateurs de fluide, ou une combinaison de ceux-ci.

14. Procédé selon la revendication 13, dans lequel une différence de pression existe entre le gaz à faire traverser (6) et le gaz ayant traversé (7).

15. Procédé selon la revendication 13 ou 14, dans lequel les parois de séparation (15) des chambres coopèrent avec la ou plusieurs entrées (11, 21) et/ou un ou plusieurs déviateurs (27a, 27b) afin de créer un mouvement tourbillonnaire au sein d'un élément structurel (3, 4).
